# DEMANDE DE BREVET EUROPEEN

(11) **EP 2 876 424 A2**
(43) Date de publication de la demande: **27.05.2015**
(21) Numéro de dépôt: 14193881.1
(22) Date de dépôt: 19.11.2014
(51) Int. Cl.: G01M 17/08, G01M 99/00

(54) **Banc de test thermique d'une bande d'usure de pantographe et procédé de test thermique correspondant**

(30) Priorité: 25.11.2013 FR 1361583
(71) Demandeur: Société Nationale des Chemins de Fer Français - SNCF, 93200 St Denis (FR)
(72) Inventeur: Blanvillain, Gérard, 37270 Veretz (FR); Auditeau, Gérard, 92140 Clamart (FR)
(74) Mandataire: Bringer, Mathieu

(57) **Abrégé**

L'invention concerne un banc de test thermique d'une bande (10) d'usure de pantographe comprenant un logement (11) de réception de ladite bande d'usure à tester ; des moyens (13, 14) d'alimentation et de retour de courant, caractérisé en ce qu'il comprend au moins un outil (15, 16, 17, 18, 19) portant au moins un segment (20, 21) d'un fil de contact de caténaire adapté pour pouvoir être alimenté en courant par lesdits moyens d'alimentation et pour pouvoir être mis en contact mécanique avec une surface supérieure de ladite bande (10) d'usure à tester, de manière à former un point, dit point chaud, de passage de courant entre ce segment de fil et ladite bande d'usure et des moyens de mesure de la température de ladite bande d'usure. L'invention concerne aussi un procédé de test thermique correspondant.

## Description

### 1. Domaine technique de l'invention

L'invention concerne les dispositifs et procédés de simulation en laboratoire de l'échauffement d'une bande d'usure de pantographe sous l'effet du passage de courant. En d'autres termes, l'invention concerne les bancs de test thermiques d'une bande d'usure de pantographe et les procédés de test correspondant mettant en oeuvre de tels bancs de test.

### 2. Arrière-plan technologique

Il est connu qu'un véhicule ferroviaire, tel qu'un train, métro ou tramway, comprend une motrice électrique alimentée en courant par l'intermédiaire d'une caténaire qui comprend des supports verticaux soutenant un fil de contact qui s'étend au-dessus des rails de chemin de fer sur lesquels circule le véhicule. Les supports de la caténaire sont espacés de quelques dizaines de mètres et supportent un câble porteur auquel est suspendu le fil de contact par l'intermédiaire de pendules. Un pantographe est en outre installé sur le toit de la motrice électrique du véhicule ferroviaire pour capter le courant électrique circulant dans le fil de contact afin d'alimenter la motrice en énergie électrique au cours de son déplacement sur les rails. Ce pantographe comprend typiquement une partie articulée portée par le toit de la motrice et un archet ou tête de captage destinée à recevoir le courant du fil de contact de la caténaire. La partie de l'archet en contact du fil de contact de la caténaire est connue sous les termes de « bande d'usure » du pantographe.

Lors de la pose d'une caténaire, le fil de contact est désaxé à chaque poteau de manière à éviter que le point de contact et de frottement entre le pantographe et le fil de contact soit toujours le même sous peine d'entraîner un vieillissement prématuré de l'archet du pantographe. C'est ce que l'on appelle le zigzag de la caténaire. Aussi, la bande d'usure de l'archet du pantographe voit glisser le fil en fonction de l'avancement du train, mais le voit aussi balayer la bande d'usure de droite à gauche et inversement par le désaxement. Cette bande d'usure est constituée d'un matériau en carbone ou en métal (cuivre et/ou acier) selon les réseaux ferroviaires. Cette bande d'usure doit pouvoir résister à l'usure par frottement et à l'usure par échauffement thermique sous l'effet du passage du courant.

Il est donc nécessaire de pouvoir tester l'échauffement des bandes d'usure de pantographe avant leurs mises en service sur les véhicules ferroviaires. Des tests et mesures en conditions réelles nécessitent de mettre en oeuvre un véhicule complet et de le faire circuler sans perturber le service commercial des autres trains. C'est une mise en oeuvre très onéreuse pour parfois constater que l'échauffement est trop élevé et qu'il faut remettre en oeuvre une autre campagne de mesure avec une bande d'usure différente.

Il existe donc un réel besoin de pouvoir tester les bandes d'usure en laboratoire, dans des conditions très proches des conditions réelles d'utilisation.

Il existe à l'heure actuelle un dispositif de test thermique des bandes d'usure en laboratoire. Ce dispositif est notamment décrit dans la norme EN50405. Un tel dispositif comprend un support de réception de la bande d'usure à tester, des plaques d'alimentation en courant qui viennent pincer les parois latérales de la bande d'usure à tester et des moyens d'alimentation en courant de ces plaques.

Un tel dispositif présente de nombreux inconvénients parmi lesquels le fait que le passage de courant se fait latéralement et non sur le dessus de la bande d'usure tel que cela se produit dans la réalité lors du glissement du pantographe sur le fil de contact de la caténaire. En outre, un tel dispositif ne simule pas l'effet zigzag du fil de contact de la caténaire sur la bande d'usure. Enfin, un tel dispositif ne permet pas de tester des bandes d'usure de faible épaisseur, comme les bandes métalliques utilisées par exemple sur une majeure partie du réseau ferroviaire français car il est très difficile de les pincer avec les plaques d'alimentation.

### 3. Objectifs de l'invention

L'invention vise à pallier au moins certains des inconvénients du banc de test thermique de l'art antérieur.

En particulier, l'invention vise aussi à fournir, dans au moins un mode de réalisation de l'invention, un banc de test thermique d'une bande d'usure d'un pantographe qui permet de mesurer l'échauffement de cette bande d'usure sous l'effet du passage d'un courant, dans des conditions proches de la réalité.

L'invention vise aussi à fournir, dans au moins un mode de réalisation, un banc de test qui permet de reproduire de la façon la plus réaliste possible le contact entre un fil de contact de caténaire et la bande d'usure.

L'invention vise aussi à fournir, dans au moins un mode de réalisation de l'invention, un banc de test qui permet d'isoler l'effet du passage de courant en excluant le frottement et ses effets perturbateurs.

L'invention vise aussi à fournir, dans au moins un mode de réalisation, un banc de test qui permet de tester tous types de bande d'usure, quelque soit leurs épaisseurs, leurs matériaux ou leurs dimensions.

L'invention vise aussi à fournir un procédé de test thermique d'une bande d'usure de pantographe à l'aide d'un banc de test thermique selon l'invention.

### 4. Exposé de l'invention

Pour ce faire, l'invention concerne un banc de test thermique d'une bande d'usure de pantographe comprenant :
- un logement de réception de ladite bande d'usure à tester,
- des moyens d'alimentation et de retour de courant.

Un banc de test selon l'invention est caractérisé en ce qu'il comprend :
- au moins un outil portant au moins un segment d'un fil de contact de caténaire adapté pour pouvoir être alimenté en courant par lesdits moyens d'alimentation et pour pouvoir être mis en contact mécanique avec une surface supérieure de ladite bande d'usure à tester, de manière à former un point, dit point chaud, de passage de courant entre ce segment de fil et ladite bande d'usure,
- des moyens de mesure de la température de ladite bande d'usure.

Un banc de test selon l'invention permet donc de reproduire et de mesurer en laboratoire l'élévation de température d'une bande d'usure sous l'effet uniquement du passage de courant électrique. Le banc selon l'invention comprend au moins un outil muni d'au moins un segment d'un fil de contact de caténaire qui peut être mis en contact mécanique et électrique avec la surface supérieure de la bande d'usure à tester. Le contact reproduit en laboratoire est donc conforme au contact réellement observé lors de l'utilisation normale d'un pantographe équipé d'une bande d'usure. Il est donc possible de tester en laboratoire une bande d'usure dans des conditions normales d'utilisation.

En outre, un banc selon l'invention comprend un logement de réception d'une bande d'usure. Ce logement de réception peut être de tous types pour pouvoir s'adapter à différents types de bandes d'usure à tester. Par exemple, le logement de réception peut comprendre une interface support de réception d'une bande d'usure. Un banc selon l'invention peut donc recevoir et tester tous les types de bandes d'usure ou archets comportant, en particulier, des bandes métalliques de faible épaisseur. Un banc selon l'invention peut recevoir une bande munie d'une plaque d'aluminium sur laquelle la bande à tester en carbone ou en métal est montée ou une bande seule sans plaque support.

Avantageusement, un banc selon l'invention, comprend au moins deux outils adjacents - de préférence cinq outils - s'étendant longitudinalement le long de la bande d'usure à tester de manière à pouvoir former au moins deux points chauds - de préférence cinq point chauds - distincts et successifs le long de la bande d'usure à tester.

Un banc selon cette variante permet donc de créer une pluralité de points chauds successifs (non simultanés) de passage de courant le long de la bande d'usure à tester. Bien évidemment, selon d'autres variantes, le banc peut comprendre plus de cinq outils pour créer plus de points chauds. Cette pluralité d'outils permet notamment de simuler le zigzag de la caténaire en créant une pluralité de points chauds de passage de courant le long de la bande d'usure.

Un banc selon cette variante permet de simuler le zigzag de la caténaire sans néanmoins générer des frottements additionnels qui pourraient perturber les mesures d'échauffement de la bande d'usure. En d'autres termes, un banc selon cette variante permet de reproduire l'effet du zigzag de la caténaire sur la bande d'usure tout en isolant l'effet du passage du courant et sans induire de frottements perturbateurs. Ainsi, un banc de test selon cette variante ne génère aucune variation de l'état de surface de la bande testée par frottement.

Selon une autre variante de l'invention, le banc comprend au moins deux outils - de préférence cinq outils - portés par un support d'outils courbe monté mobile en rotation autour d'un axe parallèle à la direction transversale de ladite bande d'usure à tester, ledit axe étant mobile en translation suivant la direction longitudinale de la dite bande.

Un banc selon cette variante permet également de simuler le zigzag de la caténaire en créant une pluralité de points chauds de passage de courant le long de la bande d'usure. Le contact d'un segment d'un outil avec la bande d'usure est obtenu par la mise en rotation du support d'outils autour de l'axe de rotation, combiné au déplacement en translation dudit axe de rotation suivant la direction longitudinale de la bande. Ainsi, l'ensemble formé par le support et les outils roule sur ladite bande d'usure à tester de telle sorte que les outils entrent successivement en contact avec la bande d'usure à tester.

Avantageusement, un banc selon cette variante comprend deux joues latérales s'étendant de part et d'autre du support d'outils pour guider la rotation dudit support d'outils dans un plan prédéterminé.

Les joues latérales permettent de maintenir le support d'outils dans un plan prédéterminé au cours de son déplacement en translation et de sa rotation autour de son axe de rotation. Aussi, la trajectoire du support d'outils est bien définie.

Avantageusement et selon l'invention, le nombre d'outils et leurs agencements respectifs est prédéterminé en fonction d'une configuration d'utilisation de ladite bande d'usure.

En d'autres termes, un banc selon l'invention peut être paramétré pour obtenir une amplitude du mouvement de zigzag correspondant à une configuration réelle d'utilisation. L'amplitude dépend notamment du nombre d'outils et de leurs espacements respectifs. Par exemple, si l'on cherche à simuler une configuration dans laquelle l'amplitude du zigzag est de 400 mm avec des outils équipés de deux segments de fils espacés l'un de l'autre de 40 mm. Il est nécessaire de disposer de cinq outils espacés successivement l'un de l'autre de 50 mm.

Avantageusement et selon l'invention, au moins un outil est mobile entre une position, dite position relevée, dans laquelle chaque segment de fil de cet outil n'est pas en contact mécanique avec ladite bande d'usure et une position, dite position de contact, dans laquelle au moins un segment de fil de cet outil - de préférence, chaque segment de fil de cet outil - est en contact mécanique avec ladite bande d'usure.

Avantageusement, un banc selon cette variante de l'invention comprend des moyens de déplacement d'au moins un outil mobile - de préférence de chaque outil mobile - adaptés pour assurer le déplacement de cet outil entre ladite position relevée et ladite position de contact.

Dans le cas où les outils sont portés par un support courbe monté en rotation autour d'un axe de rotation, ledit axe étant mobile en translation suivant la direction longitudinale de la bande, les moyens de déplacement permettent de faire pivoter le support courbe autour de l'axe de rotation et de déplacer ledit axe, ce qui permet d'amener les outils successivement en contact avec la bande d'usure à tester, ce qui permet de créer une succession de points chauds le long de la bande d'usure. On observe un phénomène de roulement des outils sur la bande à tester.

Dans le cas où les outils s'étendent longitudinalement le long de la bande d'usure, les moyens de déplacement sont par exemple formés par des actionneurs, du type à piston permettant de déplacer successivement les outils de la position relevée vers la position de contact, créant ainsi une succession de points chauds le long de la bande d'usure.

Pour la création d'un point chaud, il est nécessaire que d'une part, l'outil soit déplacé de sorte qu'au moins un segment de fil de cet outil soit en contact avec la bande d'usure, et que d'autre part ce segment de fil soit alimenté en courant.

En outre, avantageusement, un banc selon l'invention comprend des moyens de contrainte d'au moins un outil - de préférence de chaque outil - adaptés pour faire exercer par au moins un segment de cet outil - de préférence de chaque segment - une force de pression sur ladite bande d'usure à tester.

Un banc selon cette variante permet de reproduire l'effort exercé par un pantographe sur le fil d'une caténaire. Un banc selon cette variante permet donc non seulement d'isoler l'effet du passage de courant, mais également de simuler la force exercée par le pantographe sur le fil d'une caténaire. Un banc selon cette variante fournit donc une représentation fidèle de la réalité. En outre, un banc de test selon cette variante permet de maitriser l'effort de contact, sans écrasement, ni déformation excessive de la bande d'usure testée.

En outre, ces moyens de contrainte sont avantageusement paramétrables pour pouvoir adapter les niveaux d'efforts exercés par les outils aux retours d'expérience des mesures de température faites sur le matériel en service commercial.

Ces moyens de contrainte peuvent être de différentes natures selon les outils utilisés.

Par exemple, dans le cas où les outils s'étendent longitudinalement le long de la bande d'usure et sont actionnés par des moyens de déplacement, ces moyens de déplacement peuvent faire office de moyens de contrainte. En d'autres termes, une fois l'outil en position de contact, les moyens de déplacement sont adaptés pour exercer une force de poussée vers la bande d'usure pour simuler la force exercée par le pantographe sur la caténaire.

Dans le cas où les outils s'étendent longitudinalement le long de la bande d'usure, mais sont maintenus en position fixe contre la bande d'usure, les moyens de contraintes peuvent être des moyens mécaniques de serrage contrôlé des outils contre la bande d'usure. Ils peuvent également être formés par des ressorts précontraints paramétrables exerçant une force contre la bande d'usure.

Dans le cas où les outils sont portés par un support courbe, avantageusement, les moyens de contrainte sont formés par un poids prédéterminé monté sur l'axe de rotation dudit support d'outils qui exerce une force vers ladite bande d'usure à tester.

Avantageusement, un banc selon l'invention comprenant des moyens de contrainte, comprend un automate de commande pilotant lesdits moyens d'alimentation et lesdits moyens de contrainte, ledit automate étant configuré pour assurer une alimentation en courant d'au moins un segment de fil d'au moins un outil - de préférence de chaque segment de fil de chaque outil - par lesdits moyens d'alimentation qui est progressive et fonction de la variation progressive de l'effort exercé par ce segment de fil de cet outil sur la bande d'usure à tester, par le biais desdits moyens de contrainte.

Un banc selon cette variante permet donc d'assurer un transfert de courant d'un outil à un autre progressivement en fonction de la variation progressive de l'effort entre les points chauds de contact.

Selon une autre variante, l'alimentation en courant des segments de fil est permanente et ce sont les déplacements successifs des outils qui forment les points chauds successifs le long de la bande d'usure.

Avantageusement, l'automate de commande pilote également les moyens de déplacement des outils de telle sorte que la fréquence des points chauds soit maitrisée. Cela permet de faire varier la vitesse du mouvement de zigzag de la configuration simulée.

Avantageusement et selon l'invention, au moins un segment de fil d'un outil - de préférence chaque segment de fil de chaque outil - présente un méplat adapté pour venir épouser la surface supérieure usinée de ladite bande d'usure à tester.

Selon cette variante, un segment de fil présente un méplat conformé et conjugué à l'usinage de la surface supérieure de la bande d'usure, ce qui permet de reproduire l'effet d'usure d'une bande d'usure au contact d'un fil de contact de caténaire en condition normale d'utilisation.

Avantageusement et selon l'invention, au moins un outil - de préférence chaque outil - comprend une plaque isolante sous laquelle est fixé chaque segment de fil de contact de caténaire par l'intermédiaire d'une plaque d'interface, un vérin comprenant un cylindre et un piston, ledit piston étant monté sur ladite plaque isolante par l'intermédiaire d'une rotule.

La rotule permet de garantir un appui bien plat de chaque segment de fil sur la bande d'usure.

Le vérin fait office de moyens de déplacement de l'outil dans le cas des outils mobiles agencés longitudinalement le long de la bande à usiner.

De préférence, dans le cas des outils portés par un support courbe, la rotule est directement reliée au support courbe et non au vérin, qui n'a pas d'utilité majeure dans cette variante.

Avantageusement et selon l'invention, lesdits moyens de mesure de la température de ladite bande d'usure comprennent au moins une caméra thermique adaptée pour mesurer la température de ladite bande d'usure au niveau d'au moins un point chaud. De préférence, les moyens de mesure de la température sont adaptés pour mesurer la température de ladite bande au niveau de chaque point chaud formé.

En variante ou en combinaison, les moyens de mesure comprennent au moins une jauge de température agencée directement dans la bande d'usure à tester.

Avantageusement et selon l'invention, au moins un outil - de préférence chaque outil - comprend deux segments de fil de contact de caténaire agencés en parallèle l'un de l'autre. La présence de deux segments de fil parallèles permet de garantir un appui bien à plat de chaque segment de fil sur la bande.

Avantageusement, un banc de test selon l'invention est équipé d'un moyen de refroidissement de ladite bande d'usure à tester par ventilation contrôlée. Un tel moyen de refroidissement par ventilation contrôlée permet de simuler le déplacement du véhicule. Le niveau de ventilation dépend de la vitesse du véhicule que l'on souhaite simuler.

L'invention concerne également un procédé de test thermique d'une bande d'usure de pantographe mettant en oeuvre un banc de test thermique selon l'invention.

Un procédé selon l'invention est caractérisé en ce qu'il comprend les étapes consistant à :
- former successivement des points chauds par la mise en contact sous contrainte successive d'une pluralité d'outils adjacents, entre un premier outil et un dernier outil et inversement, et maintenir chaque point chaud pendant un laps de temps prédéterminé,
- mesurer la température de ladite bande d'usure au niveau de chaque point chaud formé,
- répéter le cycle jusqu'à atteindre des températures stables ou maximales autorisées.

Un procédé selon l'invention permet donc de tester une bande en formant des points chauds successifs par le maniement successif des outils et en mesurant la température des différents points chauds formés. Ces mesures de température sont de préférence permanentes pour tenir compte de l'inertie thermique de la bande d'usure testée.

Un banc de test selon l'invention et un procédé selon l'invention peuvent contribuer à fournir un certain nombre de résultats utiles lors de la conception d'un pantographe destiné à équiper un véhicule ferroviaire. Ils permettent notamment de déterminer l'élévation de température d'une bande d'usure sous un courant prédéterminé. Ils permettent également de vérifier que la température mesurée n'excède pas une consigne limite de la bande d'usure telle que spécifiée par exemple par un fabricant. Ils permettent aussi d'évaluer l'impact du passage de courant sur la répartition de chaleur dans la bande d'usure et de déterminer sa capacité de diffusion et de refroidissement.

L'invention concerne également un dispositif et un procédé caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique de face d'un banc de test thermique d'une bande d'usure d'un pantographe selon un premier mode de réalisation de l'invention,
- la figure 2 est une vue schématique de face d'un banc de test thermique selon un deuxième mode de réalisation de l'invention,
- la figure 3 est une vue schématique de face d'un banc de test thermique selon un troisième mode de réalisation de l'invention,
- la figure 4 est une vue schématique en coupe longitudinale d'un outil d'un banc de test thermique selon un mode de réalisation de l'invention,
- la figure 5 est une vue schématique en coupe transversale d'un segment de fil d'un outil en contact d'une bande d'usure d'un banc de test thermique selon un mode de réalisation de l'invention,
- la figure 6 est une vue schématique d'un procédé de test thermique d'une bande d'usure de pantographe à l'aide d'un banc de test thermique selon un mode de réalisation de l'invention.

### 6. Description détaillée de modes de réalisation de l'invention

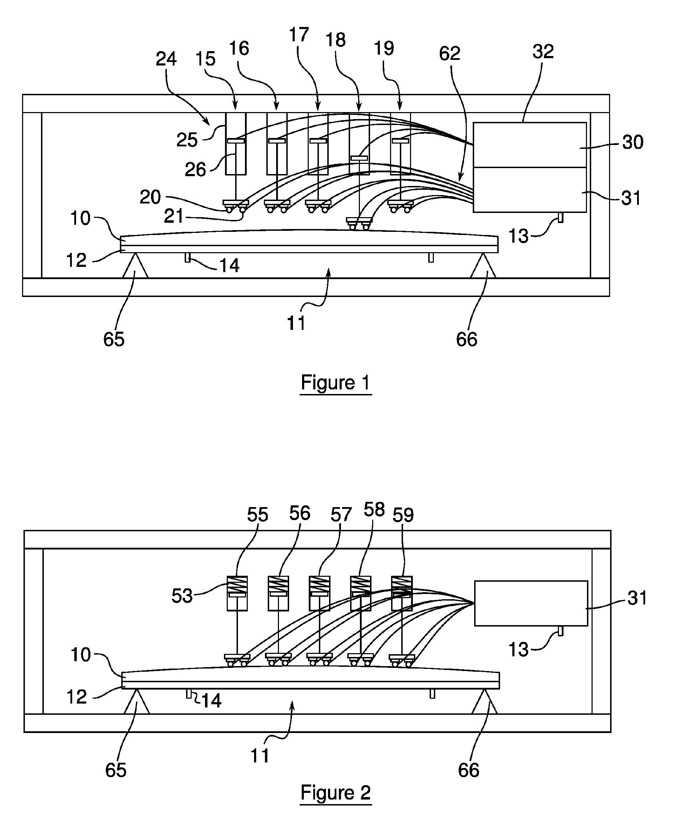

Sur la figure, les échelles et les proportions ne sont pas respectées et ce, à des fins d'illustration et de clarté. Dans toute la description détaillée qui suit en référence aux figures, sauf indication contraire, chaque élément du banc thermique est décrit tel qu'il est agencé lorsque le banc est à l'horizontale et qu'une bande d'usure à tester est placée à l'horizontale dans le banc de test. Cet agencement est notamment représenté sur les figures 1, 2 et 3.

Un banc de test thermique d'une bande 10 d'usure de pantographe selon l'invention comprend un logement 11 de réception de la bande 10 d'usure à tester. Ce logement 11 de réception comprend par exemple deux supports 65, 66 latéraux sur lesquels la bande 10 d'usure à tester est posée. Bien évidemment, selon d'autres modes de réalisation, le logement de réception peut comprendre d'autres moyens de réception et de maintien de la bande d'usure, tel que par exemple des pinces, des griffes ou tout moyen équivalent adapté pour pincer la bande à chacune de ses extrémités et la maintenir en position dans le banc de test. Le banc peut servir à tester tous types de bande d'usure, quelle que soit la dimension de la bande. Cela étant, en général, les bandes d'usure de pantographe présentent une largeur de 35 à 60 mm.

Dans le mode de réalisation des figures, la bande 10 d'usure à tester est associée à une plaque 12 support qui est directement agencée sur les supports 65, 66 latéraux. La bande peut être une bande en cuivre et/ou en acier et/ou en carbone ou en tout matériau équivalent.

Le banc thermique selon l'invention comprend également des moyens d'alimentation du banc comprenant par exemple une fiche 13 d'alimentation reliée à une source de courant non représentée sur les figures et une fiche 14 de retour de courant.

Selon un premier mode de réalisation et tel que représenté sur la figure 1, le banc thermique comprend cinq outils 15, 16, 17, 18, 19 agencés longitudinalement le long d'un axe parallèle à la bande 10 d'usure à tester. Dans toute la description, on considère que la bande d'usure s'étend le long d'une direction, dite direction longitudinale. Chaque outil porte deux segments 20, 21 d'un fil de contact de caténaire. Bien évidemment, selon d'autres modes de réalisation, le banc peut comprendre plus de cinq outils (ou moins) et chaque outil peut comprendre un seul segment de fil de contact de caténaire (ou plus de deux).

Dans toute la suite, seul l'outil 15 est décrit en détail, étant entendu que les autres outils présentent une structure et un fonctionnement identiques.

L'outil 15 porte deux segments 20, 21 de fil de contact d'une caténaire. Les fils de caténaire sont représentatifs du réseau sur lequel le véhicule équipé d'un pantographe muni de la bande d'usure testée est destiné à circuler. Par exemple, pour un véhicule ferroviaire circulant sur un réseau ferré français alimenté en courant continu, le fil est un fil de cuivre présentant une section de 107 mm². De préférence, la longueur de chaque segment 20, 21 de fil est choisie de telle sorte qu'elle présente une dimension légèrement plus grande que la largeur de la bande d'usure à tester.

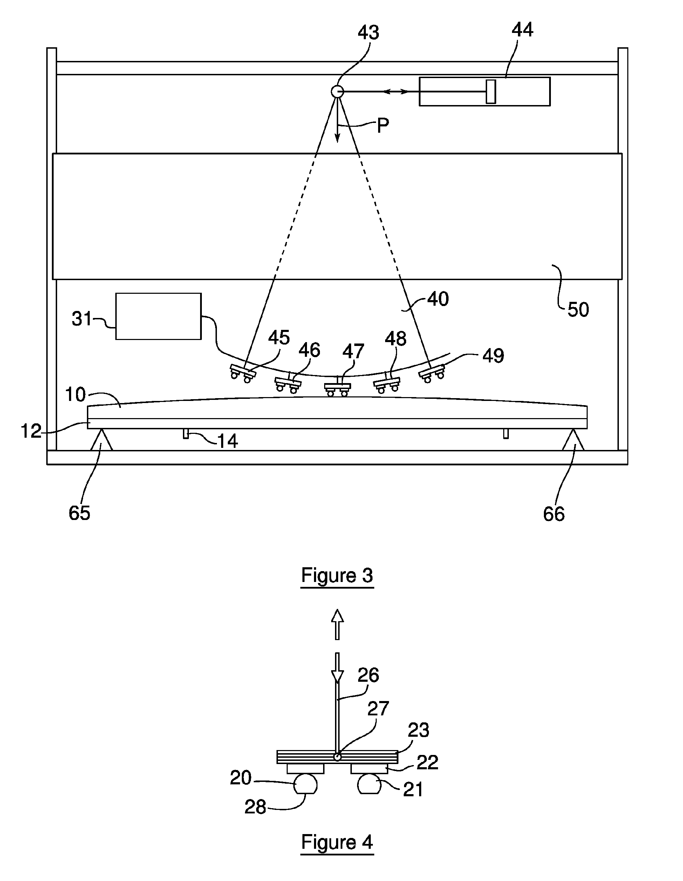

Tel que représenté sur la figure 4, chaque segment 20, 21 de fil est fixé, par exemple par soudure, sous une plaque 22 d'interface, la plaque 22 d'interface étant elle-même fixée sous une plaque 23 isolante. Les segments 20, 21 de fil sont espacés l'un de l'autre d'une distance comprise entre 25 à 60 mm, par exemple de 40 mm. La distance entre les deux segments est choisie en fonction des caractéristiques du réseau ferroviaire sur lequel la bande 10 d'usure testée est destinée à être utilisée.

La plaque 23 isolante est de préférence une plaque rigide formée en un matériau du type époxy. Elle présente par exemple des dimensions de 50 x 60 mm² et une épaisseur de 10 à 20 mm.

La plaque 23 isolante est reliée à un vérin 24 formé d'un cylindre 25 et d'un piston 26 qui est adapté pour coulisser à l'intérieur du cylindre 25. Le piston 26 du vérin 24 est relié à la plaque isolante 23 par l'intermédiaire d'une rotule 27, ce qui confère à l'outil 15 une liberté de mouvement dans un plan horizontal et permet ainsi un appui à plat des deux segments 20, 21 de l'outil 15 sur la surface supérieure de la bande 10 d'usure à tester.

De préférence, chaque segment de fil 20, 21 présente un méplat 28 formé par usinage. La bande 10 d'usure à tester est également usinée pour assurer une planéité parfaite et une rugosité contrôlée, par exemple inférieure à 0,8 µm.

La combinaison de l'usinage des segments de fil 20, 21 et de l'usinage de la bande d'usure à tester permet de garantir un contact parfait entre l'outil 15 et la bande d'usure.

Dans le mode de réalisation de la figure 1, chaque outil est mobile entre une position relevée dans laquelle chaque segment 20, 21 de fil de cet outil n'est pas en contact mécanique avec ladite bande 10 d'usure et une position de contact, dans laquelle les segments 20, 21 de fil de cet outil sont en contact mécanique avec la bande d'usure. Sur la figure 1, l'outil 18 est en position de contact alors que les outils 15, 16, 17 et 19 sont en position relevée.

Le passage de la position relevée à la position de contact est obtenu par l'actionnement des vérins des outils, qui forment des moyens de déplacement des outils. De préférence, ces vérins sont des vérins pneumatiques actionnés par une unité 30 de commande pneumatique. Selon un autre mode de réalisation, ces vérins sont hydrauliques actionnés par une unité de commande hydraulique ou électrique.

L'unité 30 de commande pneumatique est configurée pour entraîner le déplacement des outils à tour de rôle de manière à pouvoir entraîner à tour de rôle chaque outil en position de contact. De plus, l'unité 30 de commande est configurée pour que chaque outil, une fois en position de contact, exerce une force de pression prédéterminée contre la bande d'usure, formant ainsi des moyens de contrainte de chaque outil. Cette force de pression permet de simuler un contact maîtrisé entre un pantographe équipé d'une bande d'usure et une ligne de caténaire.

En parallèle au déplacement des outils et à la contrainte exercée sur chaque outil, une unité 31 de commande électrique est configurée pour piloter les moyens d'alimentation électrique de telle sorte qu'ils alimentent les segments de l'outil en contact avec la bande d'usure de manière à former un point chaud de passage de courant entre les segments et la bande 10 d'usure. Des fils 62 électriques agencés entre les moyens d'alimentation électrique et les plaques 22 d'interface permettent de véhiculer le courant, sur commande de l'unité 31 de commande électrique, jusqu'aux segments de chaque outil. Cette unité 31 de commande électrique est par exemple formée de plusieurs contacteurs et d'une carte électrique de commande.

L'unité 30 de commande pneumatique et l'unité de commande 31 de commande électrique forment un automate 32 de commande.

Cet automate 32 de commande est configuré pour assurer une alimentation en courant des segments 20, 21 de fil de chaque outil qui est progressive et fonction de la variation progressive de l'effort exercé par cet outil sur la bande d'usure à tester.

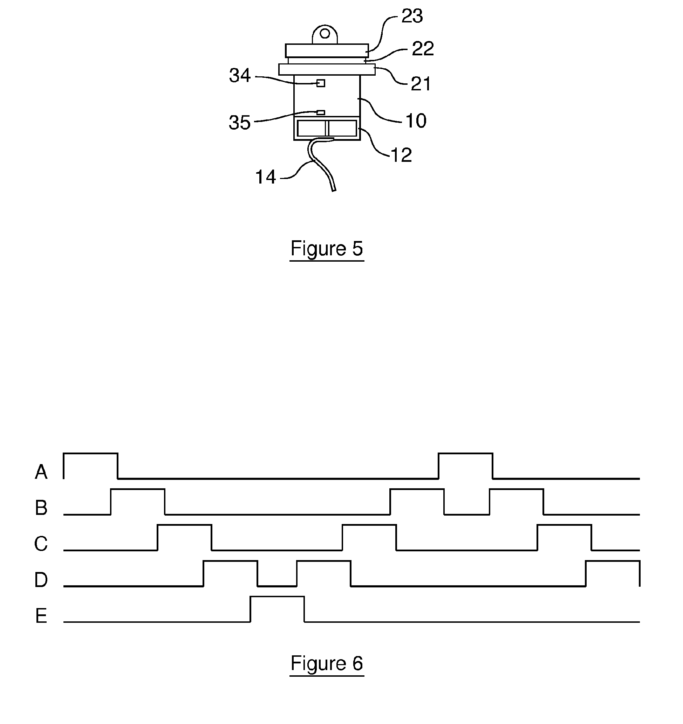

Le principe de commande par l'automate 32 de commande est représenté sur la figure 6.

Chaque ligne A, B, C, D et E représente les variations de position respectivement des outils 15, 16, 17, 18 et 19.

Les outils sont normalement en position relevée, c'est-à-dire qu'ils ne sont pas en contact avec la bande 10 d'usure à tester.

L'outil 15 est abaissé par une commande de déplacement de l'outil 15 de la position relevée à la position de contact (la ligne de commande passe d'un état 1 - correspondant à la position relevée - à un état 0 - correspondant à la position en contact - ). L'outil est maintenu en position de contact pendant un laps de temps prédéterminé. Pendant ce laps de temps, le vérin exerce une force de pression sur la bande 10 d'usure. De plus, l'unité 31 de commande électrique assure la formation d'un point de chaud par l'alimentation en courant des segments de fil de cet outil 15.

L'outil 16 adjacent est ensuite abaissé par une commande de déplacement de l'outil 16. Dès que l'outil 16 atteint sa position de contact, la contrainte exercée par l'outil 15 sur la bande d'usure est allégée proportionnellement à celle exercée par l'outil 16 sur la bande d'usure. En outre, l'alimentation en courant de l'outil 16 est naturellement proportionnelle à la contrainte exercée par cet outil 16. Aussi, l'outil 16 va progressivement récupérer toute l'alimentation en courant et être le seul outil à exercer une force de pression sur la bande d'usure. Le point chaud de passage de courant va donc progressivement se déplacer de l'outil 15 vers l'outil 16. Comme représenté sur les figures, les outils 15 et 16 sont pendant un laps de temps prédéterminé simultanément en contact avec la bande d'usure.

Les mêmes opérations sont répétées jusqu'au dernier outil 19.

Lorsque le dernier outil 19 a formé son point chaud correspondant, les opérations sont répétées dans le sens inverse avec la formation du point chaud de l'outil 18, puis celui de l'outil 17, et ainsi de suite, jusqu'à la formation du point chaud du premier outil 15.

Ce cycle de formation des points chauds par l'activation des outils 15 à 19, puis inversement de 19 à 15, se répète jusqu'à ce que la température mesurée soit stable ou atteigne une valeur limite prédéterminée.

L'alimentation des segments des outils peut être permanente ou liée à la position de l'outil (c'est-à-dire que l'alimentation n'est effective que lorsque l'outil est en position de contact). Lorsque l'alimentation est permanente, les segments de fil sont alimentés en permanence de sorte que seuls les cycles de montée/descente de chaque outil sont pilotés par l'automate de commande et conditionnent la formation d'un point chaud.

Dans le cadre du mode de réalisation de la figure 1, l'alimentation permanente des outils est plus simple à réaliser et ne nécessite pas une unité de commande électrique complexe.

L'automate 32 de commande est programmé de sorte que le temps qui sépare deux descentes d'un même outil corresponde au temps mis par une caténaire pour effectuer un zigzag correspondant à la configuration réelle d'un train prédéterminé à une vitesse prédéterminée. Ces paramètres varient pour chaque réseau et pour chaque type de véhicule. Par exemple, pour des véhicules de chemin de fer circulant sur le réseau français et alimentés par des tensions de 25 KV, un cycle est effectué en 2s à la vitesse de 220 km/h et l'amplitude du zigzag est de 400mm. Dans le cas d'une alimentation en courant continu, le zigzag observé est complet en 8s. En Allemagne, l'amplitude observée est de 600 mm.

Un banc de test selon l'invention permet de tester toutes les configurations en paramétrant l'automate de commande et en adaptant le nombre d'outils et leurs agencements respectifs.

Il est par exemple possible de simuler un réseau qui ne comprend qu'un seul fil de contact de caténaire en remplaçant un segment de fil d'un banc de test selon le mode de réalisation de la figure 1 par un isolant ou en déconnectant un segment de fil de chaque outil. Il est également possible d'adapter la distance qui sépare deux outils et/ou d'augmenter le nombre d'outils du banc de test pour obtenir un banc de test qui reproduit les conditions spécifiques d'utilisation de la bande d'usure testée.

La mesure de la température des points chauds formés dans la bande d'usure 10 testée est obtenue par exemple par l'utilisation d'une caméra thermique agencée face à la bande d'usure. La température peut aussi être mesurée par l'utilisation de jauges thermiques ménagées dans et/ou sous la bande d'usure.

Par exemple, la figure 5 représente une bande d'usure 10 en coupe dans laquelle des jauges 34, 35 thermiques ont été ménagées. Ces jauges thermiques peuvent être de tous types connus. Les mesures de températures sont récupérées par une unité de traitement et analysées. Cette unité de traitement permet de déterminer si les cycles de test doivent se poursuivre ou si de nouveaux cycles doivent être entrepris.

Selon un deuxième mode de réalisation et tel que représenté sur la figure 2, le banc de test comprend des outils 55, 56, 57, 58 et 59 montés fixes par rapport à la bande 10 d'usure à tester. En d'autres termes, les outils ne sont plus mobiles entre une position relevée et une position de contact, mais ils sont systématiquement en position de contact. Chaque outil peut présenter une structure identique à celle décrite en lien avec le premier mode de réalisation de la figure 1.

Le fonctionnement du banc est alors identique à celui décrit en lien avec le premier mode de réalisation, à la différence près que l'actionnement des vérins de chaque outil n'est utilisé que pour exercer une force de contrainte de chaque outil contre la bande d'usure à tester.

En outre, l'alimentation des outils ne peut pas être permanente et c'est précisément l'alimentation successive des outils qui permet de former les points chauds successifs le long de la bande d'usure. La commande électrique est configurée pour alimenter successivement chaque outil. En d'autres termes, par rapport au mode de réalisation de la figure 1, le séquençage des déplacements des outils est remplacé par le séquençage de l'alimentation des outils par l'unité de commande. Cette alimentation en courant peut être progressive d'un outil à un outil adjacent ou être une alimentation brusque, un outil passant soudainement d'un état alimenté à un état non alimenté, et l'outil adjacent passant lui soudainement d'un état non alimenté à un état alimenté. Le déplacement progressif du point chaud le long de la bande d'usure est alors obtenu par le contact simultané pendant un laps de temps prédéterminé des deux outils adjacents, comme décrit en lien avec la figure 6.

Selon le mode de réalisation de la figure 2, les outils sont précontraints contre la bande d'usure. En particulier, chaque outil comprend un ressort taré adapté pour exercer un effort prédéterminé sur la bande d'usure par l'intermédiaire d'un piston mécanique.

Dans un autre mode de réalisation non représenté, chaque outil peut ne plus comprendre de vérin et être fixé sur la bande d'usure par des moyens du type vis-écrou ou pinces. Le serrage de chaque outil détermine la contrainte de l'outil sur la bande d'usure.

Selon un troisième mode de réalisation et tel que représenté sur la figure 3, le banc thermique comprend un support 40 d'outils courbe qui porte des outils 45, 46, 47, 48, 49 agencés le long de la courbure du support 40. Chaque outil peut présenter une structure identique à celle décrite en lien avec le premier ou le deuxième mode de réalisation précédemment décrits. Cela étant, de préférence, chaque outil 45, 46, 47, 48 et 49 ne comprend pas de vérin dédié de telle sorte que la plaque isolante de chaque outil est directement fixée sur le support 40 courbe.

Ce support 40 est monté pivotant autour d'un axe 43 qui est entraîné en translation par un actionneur à piston 44 unique qui forme les moyens de déplacement des outils. Cet actionneur est piloté par l'automate 32 de commande. Le déplacement roulant du support 40 est guidé par deux joues 50 latérales parallèles qui s'étendent de part et d'autre de la bande d'usure à tester et qui permettent de maintenir le support dans une trajectoire parallèle à l'axe de la bande 10 d'usure.

La mise en rotation du support 40 résultant de la mise en translation de l'axe 43 permet de déplacer chaque outil d'une position dans laquelle il n'est pas en contact avec la bande d'usure à une position dans laquelle il est en contact avec la bande 10 d'usure. En d'autres termes, par rapport au premier mode de réalisation, le déplacement des outils par le biais des vérins individuels de chaque outil du premier mode de réalisation est remplacé par un roulement du support courbe 40 par le biais d'un actionneur unique.

Les moyens de contrainte sont réalisés par un poids schématiquement référencé par la lettre P sur la figure 3. Ce poids P exerce une force de pression de chaque outil sur la bande d'usure, une fois dans la position de contact. Ce poids P permet d'assurer la progression de l'effort en fonction du déplacement du support 40.

L'alimentation électrique par l'unité 31 de commande des segments de fil est sensiblement identique à celle décrite en lien avec la figure 1. A ce titre, elle peut être permanente ou séquencée.

L'invention ne se limite pas aux seuls modes de réalisation décrits. En particulier, un banc de test selon l'invention peut comprendre deux logements de réception de manière à pouvoir tester les bandes d'usure d'un pantographe comprenant deux bandes et dont l'armature de support n'est pas dissociable. Le principe est sensiblement identique à celui décrit avec deux bandes agencées côte à côte dans le banc de test et une pluralité d'outils ménagés en regard de chacune des bandes d'usure à tester.

## Revendications

1. Banc de test thermique d'une bande (10) d'usure de pantographe comprenant :
- un logement (11) de réception de ladite bande (10) d'usure à tester,
- des moyens (13, 14) d'alimentation et de retour de courant, **caractérisé en ce qu'**il comprend :
- au moins deux outils (15, 16, 17, 18, 19 ; 55, 56, 57, 58, 59 ; 45, 46, 47, 48, 49) adjacents s'étendant longitudinalement le long de la bande d'usure à tester, chaque outil portant au moins un segment (20, 21) d'un fil de contact de caténaire adapté pour pouvoir être alimenté en courant par lesdits moyens d'alimentation et pour pouvoir être mis en contact mécanique avec une surface supérieure de ladite bande (10) d'usure à tester, de manière à former un point, dit point chaud, de passage de courant entre ce segment (20, 21) de fil et ladite bande (10) d'usure, lesdits outils formant au moins deux points chauds distincts et successifs le long de la bande d'usure à tester,
- des moyens (34, 35) de mesure de la température de ladite bande (10) d'usure.

2. Banc de test selon la revendication 1, **caractérisé en ce qu'**il comprend au moins deux outils (45, 46, 47, 48, 49) portés par un support (40) d'outils courbe monté mobile en rotation autour d'un axe (43) parallèle à la direction transversale de ladite bande (10) d'usure à tester, ledit axe (43) étant mobile en translation le long de la direction longitudinale de ladite bande.

3. Banc de test selon l'une des revendications 1 ou 2, **caractérisé en ce que** le nombre d'outils et leurs agencements respectifs est prédéterminé en fonction d'une configuration d'utilisation de ladite bande (10) d'usure.

4. Banc de test selon l'une des revendications 1 à 3, **caractérisé en ce qu'**au moins un outil (15, 16, 17, 18, 19 ; 45, 46, 47, 48, 49) est mobile entre une position, dite position relevée, dans laquelle chaque segment de fil de cet outil n'est pas en contact mécanique avec ladite bande (10) d'usure et une position, dite position de contact, dans laquelle au moins un segment (20, 21) de fil de cet outil est en contact mécanique avec ladite bande d'usure.

5. Banc de test selon la revendication 4, **caractérisé en ce qu'**il comprend des moyens (25, 26 ; 44) de déplacement d'au moins un outil (15, 16, 17, 18, 19 ; 45, 46, 47, 48, 49) mobile adaptés pour assurer le déplacement de cet outil entre ladite position relevée et ladite position de contact.

6. Banc de test selon l'une des revendications 1 à 5, **caractérisé en ce qu'**il comprend des moyens (25, 26 ; 53 ; P) de contrainte d'au moins un outil adapté pour faire exercer par au moins un segment (20, 21) de cet outil une force de pression sur ladite bande (10) d'usure à tester.

7. Banc de test selon les revendications 2 et 6 prises ensemble, **caractérisé en ce que** lesdits moyens (P) de contrainte sont formés par un poids prédéterminé monté sur l'axe (43) de rotation dudit support (40) d'outils qui exerce une force vers ladite bande d'usure à tester.

8. Banc de test selon la revendication 6 ou 7, **caractérisé en ce qu'**il comprend un automate (32) de commande pilotant lesdits moyens d'alimentation et lesdits moyens de contrainte, ledit automate (32) étant configuré pour assurer une alimentation en courant d'au moins un segment (20, 21) de fil d'au moins un outil par lesdits moyens d'alimentation qui est progressive et fonction de la variation progressive de l'effort exercé par ce segment (20, 21) de fil de cet outil sur la bande d'usure à tester, par le biais desdits moyens de contrainte.

9. Banc de test selon l'une des revendications 1 à 8, **caractérisé en ce qu'**au moins un segment (20, 21) de fil d'un outil présente un méplat (28) adapté pour venir épouser la surface supérieure usinée de ladite bande (10) d'usure à tester.

10. Banc de test selon l'une des revendications 1 à 9, **caractérisé en ce qu'**au moins un outil comprend une plaque (23) isolante sous laquelle est fixé chaque segment (20, 21) de fil de contact de caténaire par l'intermédiaire d'une plaque (22) d'interface, un vérin (24) comprenant un cylindre (25) et un piston (26), ledit piston (26) étant monté sur ladite plaque (23) isolante par l'intermédiaire d'une rotule (27).

11. Banc de test selon l'une des revendications 1 à 10, **caractérisé en ce que** lesdits moyens de mesure de la température de ladite bande d'usure comprennent au moins une caméra thermique adaptée pour mesurer la température de ladite bande d'usure au niveau d'au moins un point chaud.

12. Banc de test selon l'une des revendications 1 à 11, **caractérisé en ce qu'**au moins un outil comprend deux segments (20, 21) de fil de contact de caténaire agencés en parallèle l'un de l'autre.

13. Procédé de test thermique d'une bande (10) d'usure de pantographe à l'aide d'un banc de test thermique selon l'une des revendications 1 à 12, **caractérisé en ce qu'**il comprend les étapes consistant à :
- former successivement des points chauds par la mise en contact sous contrainte successive d'une pluralité d'outils adjacents, entre un premier outil et un dernier outil et inversement, et maintenir chaque point chaud pendant un laps de temps prédéterminé,
- mesurer la température de ladite bande d'usure au niveau de chaque point chaud formé,
- répéter le cycle jusqu'à atteindre des températures stables ou maximales autorisées.
